# EUROPEAN PATENT SPECIFICATION

(11) **EP 1 358 830 B1**
(45) Date of publication and mention of the grant of the patent: **31.10.2007**
(21) Application number: 03014261.6
(22) Date of filing: 25.08.1993
(51) Int. Cl.: A47J 27/21

(54) **Connector system for cordless appliances**
VERBINDUNGSSYSTEM FÜR SCHNURLOSE GERÄTE
Système de connexion pour un appareil ménager sans fil

(30) Priority: 02.09.1992 GB 9218663; 29.01.1993 GB 9301827
(43) Date of publication of application: 05.11.2003
(62) Divisional of application: 98204246.7
(73) Proprietor: OTTER CONTROLS LIMITED, Buxton, Derbyshire SK17 6LA (GB)
(72) Inventor: O'Neill, Robert Andrew of "Morcot", Buxton, Derbyshire SK 17 9NQ (GB); Gaeta, Antonio, Buxton, Derbyshire SK 17 9AN (GB); White, Ian Geoffrey of "Tarronthorp", Buxton, Derbyshire SK 17 9ER (GB); Brook, Stephen Roger, Buxton, Derbyshire SK1 6XT (GB); Harrison, Ronald Brian of "Three Tuns", Nr. Buxton, Derbyshire SK17 8LQ (GB)
(74) Representative: Milhench, Howard Leslie

(56) References cited:
- GB-A- 2 236 220
- TW-A- 32 591

## Description

### Field of the Invention:

This invention generally concerns improvements relating to electrical appliances and connectors therefor and more particularly relates to an improved connection system for so-called "cordless" electrical water heating appliances such as kettles and hot water jugs in which power is supplied to an appliance proper via a base unit coupled to the electrical supply, there being co-operating electrical connectors on the base unit and the vessel for powering a heating element of the vessel via the base.

### Background of the Invention:

Cordless appliances generally have a socket outlet provided in or on the base unit and a mating connecting inlet in or on the appliance proper, and generally require fairly precise alignment between these two parts in order to connect the appliance proper to the base. The connecting inlet of the appliance proper commonly comprises a set of male terminal pins which are adapted to mate with a complementary set of female terminals provided in a shrouded portion of the base unit, and the base unit terminals are commonly provided in an upstand formed on the base unit and adapted to locate in a generally complementary recess formed in the body of the appliance proper for providing the degree of alignment between the respective parts that is necessary to ensure correct mating of the two parts of the connection system. An exemplary cordless connection system of this kind is disclosed in our British Patent Application No. 9102099.0 (GB-A-2 241 390). An alternative system in which the terminal pins are provided in the base unit and complementary spring terminals are provided in the appliance proper is disclosed in our British Patent Application No. 9018502.6 (GB-A-2 236 220).

Another system is disclosed in the document TW32591 A.

The requirement that the appliance proper and the base unit should mate with each other only in a predetermined single orientation is a restriction upon the freedom of the appliance designer to achieve the desired product form and also presents some inconvenience to users of the appliance. It has previously been recognized that an excessive requirement for alignment of the appliance proper with the base unit is undesirable and in British Patent No. GB-B-2 221 104 (Strix Ltd.) there is disclosed a cordless connection system which is generally conventional but is adapted to accommodate a degree of initial misalignment of the appliance proper with the base. However, prior to the present invention (insofar as we are aware) no attempt has been made to design a cordless connection system which does not, or at least substantially does not, require alignment of the respective parts.

### Objects and Summary of the Invention:

It is the principal object of the present invention to provide a connection system for cordless electrical water heating appliances which overcomes or at least substantially reduces the problems of the prior art as discussed hereinbefore.

According to the present invention there is provided a cordless electrical water heating appliance comprising: a vessel provided with a heating element for heating water in the vessel, a base for connection to an electrical power supply, an electrical connector provided on the base and a complementary electrical connector provided on the vessel, whereby the heating element in the vessel can be powered via the base when the vessel is seated on the base and said connectors are connected to each other, characterized in that said electrical connectors constitute an electrical connection system permitting the vessel to be operatively coupled to the base throughout 360° of relative rotational orientation between the respective parts and the electrical connector that is provided on the base is a shuttered electrical connector in the form of a socket adapted to receive a complementary plug provided on the vessel, the shutter comprising a member mounted with spring bias within the socket so as normally to be held in closed condition by the spring and said member being such that it can be depressed into the socket only if it is maintained in a predetermined disposition relative to the socket.

The external form of the male and female connector parts could advantageously be shaped to facilitate mating of the two connector parts by guiding them together once they were imprecisely engaged with each other.

In accordance with an embodiment of the present invention, described in detail hereinafter, the shutter has rotational symmetry and is arranged to be opened by movement in relation to co-operating parts in a predetermined direction, such movement being possible only if the shutter has a predetermined disposition relative to at least one co-operating part and the shutter and/or such co-operating parts) being configured to permit alternative disposition of the shutter. With such a shutter provided in one part of a two part complementary connector system, the other part is provided with means to ensure displacement of the shutter with the shutter held in the requisite disposition for opening of the same.

More generally, the abovementioned embodiment of the present invention comprises a plug part and a socket part, the plug part being insertable into the socket part by relative movement between the two parts in a predetermined direction irrespective of the relative rotational orientation of the two parts transversely to said predetermined direction, and the shutter being provided in the socket part and being displaceable therein for admitting the plug part only if the shutter has a predetermined disposition, the shutter being capable of adopting alternative dispositions within the socket part, and the plug part being formed so as to hold the shutter in said predetermined disposition so long as the plug part and socket part are approached to each other in said predetermined direction.

In this embodiment, the shutter includes a circularly-cylindrical part which is axially displaceable, against a spring bias, within a second circularly-cylindrical part so long as the axes of the two cylindrical parts have a predetermined relative disposition, namely they are coaxial or very nearly so. The shutter and the second cylindrical part are, however, constructed so as to permit the shutter to be tilted and it is arranged that the shutter then cannot be opened by being displaced into the second cylindrical part. The shutter and the second circularly-cylindrical part are both incorporated into one connector part of the system, and the other part includes a circularly-cylindrical part adapted for displacing the shutter in the requisite direction while holding it in the requisite disposition. Any effort to open the shutter which does not simultaneously ensure that it is held in the requisite opening disposition will cause it to tilt thereby preventing it from being opened. The two connector parts, so long as they are brought together in the requisite degree of coaxial orientation for effecting opening of the shutter, are capable of being connected together within the full 360° range of relative rotational orientation and there is no requirement to effect rotary alignment of the two parts.

The foregoing and further aspects of the present invention are set forth in the appended claims and will best be understood from consideration of the following description of an exemplary embodiment of the invention which is illustrated in the accompanying drawings.

### Description of the Drawings:

Figure 1 is an axially exploded view of an exemplary connector socket part constructed and arranged in accordance with an embodiment of the present invention;
Figure 2A shows the connector socket part of Figure 1 in assembled condition and with its component parts shown in enlarged sectional side elevation view, and Figure 2B shows a sectional side elevation view of an exemplary connector plug part adapted to be mated with the socket part of Figure 2A;
Figure 3 shows the connector socket and plug parts of Figures 2A and 2B in engaged condition;
Figure 4 is a view similar to Figure 2A and illustrating the operation of the shutter mechanism incorporated into the connector socket part; and
Figure 5 is a perspective view of the connector socket part illustrating water shedding features incorporated into its upper parts.

### Detailed Description of the Embodiments:

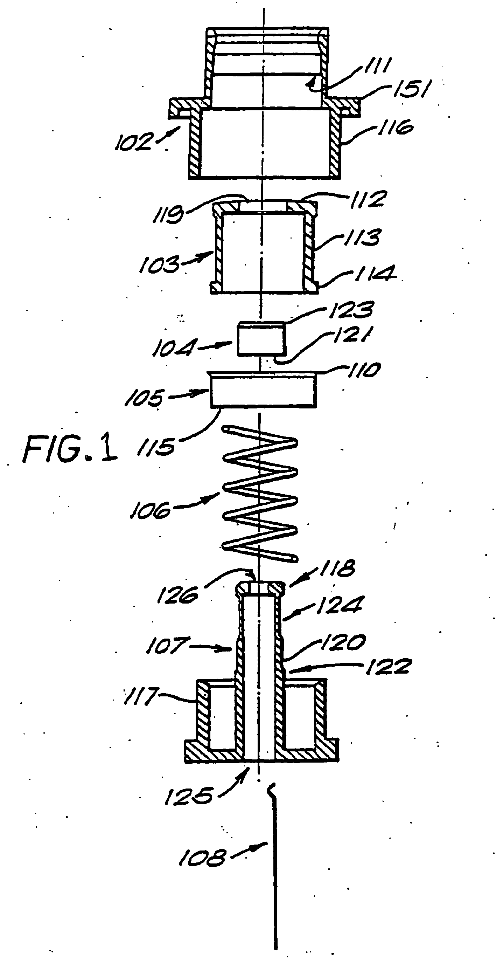

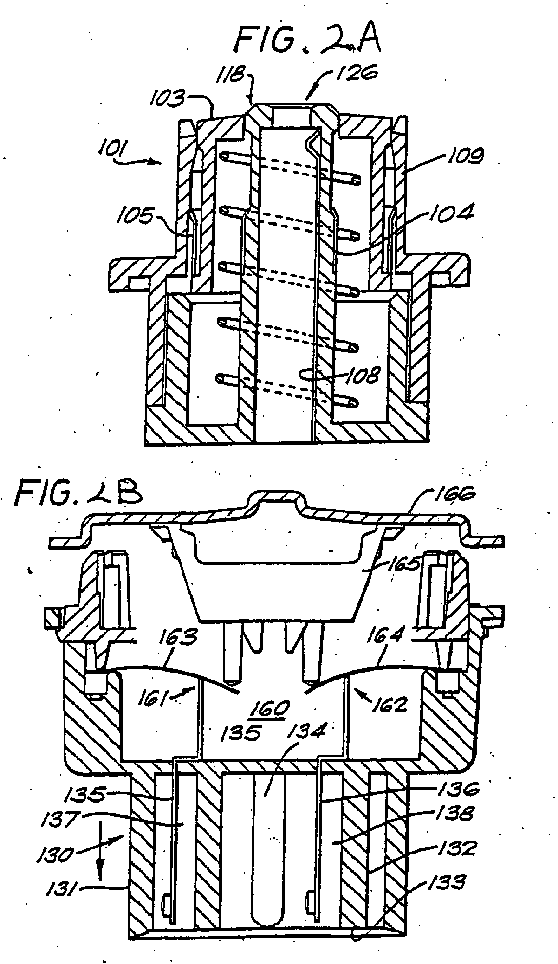

Referring to Figures 1 and 2A, the connector socket part of an embodiment is generally designated 101 and is formed of a number of generally circularly-cylindrical components which assemble together to form a socket having rotational symmetry in a plane transverse to the axial direction of the components, which corresponds to the direction in which 'the plug and socket parts of the connector are moved to mate the two connector parts. The components of the socket part comprise a moulded plastics main housing 102, a moulded plastics shutter 103, first and second electrical contact rings 104 and 105, a spiral spring 106, a moulded plastics base 107 and a spring contact finger 108.

As best shown in Figure 2A, the larger diameter contact ring 105 fits within an upper part 109 of the main housing 102 which is dimensioned to make close contact with an outwardly turned upper edge 110 of the contact ring 105 which abuts a shoulder 111 formed in the main housing 102. The shutter 103 fits loosely within the main housing 102 so as to be axially moveable with a degree of freedom to tilt as will be explained below, and comprises an annular head portion 112, a cylindrical portion 113 and an outwardly extending flange 114 which abuts the lower edge 115 of the contact ring 105 to prevent the shutter from moving out of the main housing. The main housing 102, with the contact ring 105 and shutter 103 installed, fits onto the base 107 with a cylindrical lower part 116 of the main housing fitting closely over an upstanding cylindrical part 117 of the base and a hollow central post 118 of the base extending upwards through the central opening 119 provided in the head of the shutter 103.

The lesser diameter contact ring 104 fits tightly onto an appropriately dimensioned part 120 of the post 118 with its lower edge 121 abutting a shoulder 122 provided on the post, and the upper edge 123 of the ring 104 is turned inwardly so as to conform to the lower extremity of an undercut portion 124 of the post 118. The spring contact finger 108 extends within the central hollow 125 of the post 118 and an opening 126 is provided in the top of the post for admitting a terminal pin to the interior of the post for electrically contacting the contact finger 108.

Figure 2B shows an exemplary form of overtemperature disconnect device, suitable for use with a water boiling appliance for example, the device including a connector plug part adapted for use with the connector socket part of Figures 1 and 2A. The connector plug part is generally designated 130 and comprises a plastics moulding formed with an outer circularly-cylindrical wall 131 dimensioned to make a relatively close fit over the upper part 109 of the main socket housing 102, and an inner circularly-cylindrical wall 132 dimensioned to make a relatively close fit into the space occupied by the shutter 103 of the socket between the central post 118 and the radially inner surface of the socket part 109, the lower edge 133 of the inner wall 132 serving to depress the shutter 103 when the plug is correctly inserted into the socket in the axial direction. A central, axially extending terminal pin 134 is mounted in the plug part 130 and is adapted to extend into the opening 126 provided in the top of the central post 118 of the connector socket and to make electrical contact with the spring finger 108, the first and second spring terminals 135 and 136 each carrying an electrical contact at its free end are cantilevered within the plug part 130 in registry with respective grooves 137 and 138 provided in the outer and inner surfaces respectively of the inner wall 132 of the plug, the grooves 137 and 138 providing space for the respective spring terminals 135 and 136 to flex.

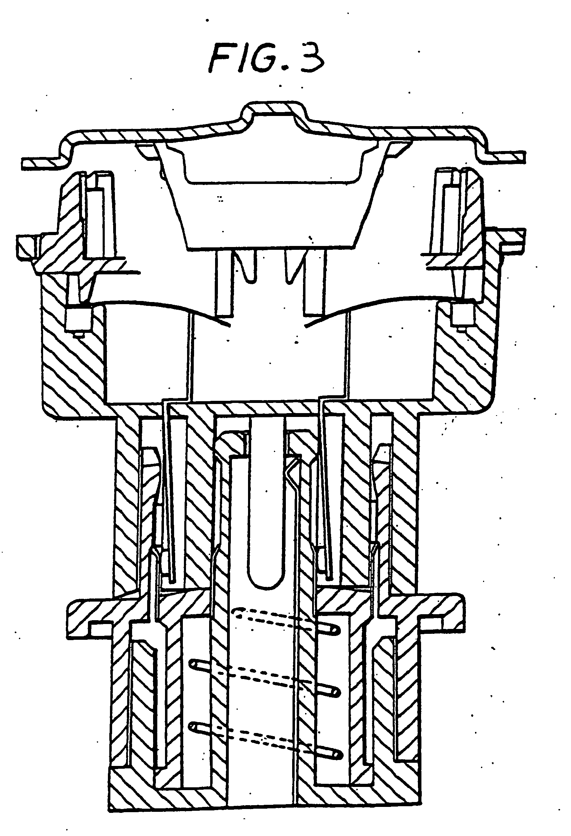

Figure 3 shows the connector plug part 130 of Figure 2B mated with the connected socket part 101 of Figure 2A, the mating of the two parts being effected by moving them together in the axial direction as indicated by the arrow shown in Figure 2B. It will be seen from Figure 3 that the central terminal pin 134 of the plug part makes electrical contact with the spring finger 108 of the socket part, that the contact provided at the free end of spring terminal 135 of the plug part makes electrical contact with the outer contact ring 105 of the socket part, and that the contact provided at the free end of spring terminal 136 of the plug part makes electrical contact with the inner contact ring 104 of the socket part. The shutter 103 in the socket part is depressed against the bias of the spring 106 by the lower edge 133 of the wall 132 of the plug part, and will be restored to its closed condition as shown in Figure 2A by the action of the spring 106 when the plug part 130 is withdrawn from the socket part 101, abutment of the upper surface of the flange 114 on the shutter 103 with the lower edge 115 of the outer contact ring 105 limiting the range of upward movement of the shutter in the plug socket part.

As mentioned previously, an undercut 124 (namely a portion of lesser diameter) is provided on the central post 118 of the socket part 101 just above the location of the contact ring 104. A similar undercut is defined within the upper part 109 of the main socket moulding 102 just above the location of the contact ring 105. The purpose of these undercuts is to prevent the contacts provided on the spring terminals 135 and 136 of the plug part. dragging on the respective surfaces of the socket part during insertion and withdrawal of the plug part and possibly leaving metallic tracks on the surfaces. Such tracks would be electrically conductive and would represent an electrical hazard. The undercuts also reduce wear on the electrical contacts which may, for example, be formed of silver. The contact rings 104 and 105 are preferably formed of copper or a copper alloy having a thermal conductivity at least 90% of that of copper and provided with a thick (e.g. 50µm) surface plating of a silver antimony alloy as described in GB-A-2253097, and the terminal pin 134 may be similarly formed.

It will be seen that the plug and socket parts of the connector of Figures 1 to 5 have rotational symmetry in a plane transverse to the axial direction of their insertion one into the other as depicted by the arrow shown in Figure 2B). Namely, apart from the spring 106 and the spring terminals 135 and 136, all of the component parts of the plug and socket are generally circular in transverse cross-section, transverse that is to the axial direction. The fact that this is so enables the plug part of the connector to be introduced into the socket part throughout a full 360° of relative rotation between the parts.

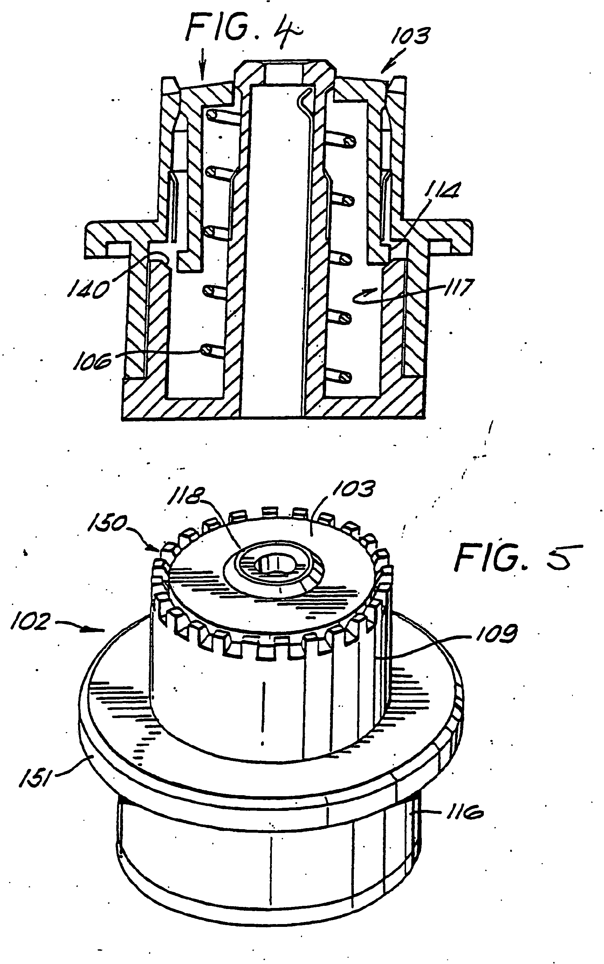

Referring to Figure 4, this is a view of the socket part of the connector which is very similar to Figure 2A, but illustrates the locking action of the shutter in the event that it is subject to a force which is not applied uniformly throughout the full extent of its annular upper surface. In order to meet safety requirements, it must not be possible to gain access to live parts within the socket by depressing the shutter with a test or human finger and, as shown in Figure 4, the arrangement of the shutter 103 is such that if it is depressed at a single point, as shown by the arrow, then it rocks upon the supporting spring 106 and its lower rim engages the upper edge of the cylindrical upstand 117 which prevents downwards movement of the shutter. The shutter can only be depressed into the socket by application to the top of the shutter of a force which is more or less uniform throughout the annular extent of the shutter head so that the shutter is maintained in coaxial alignment with the socket and its flange 114 can slide down within the cylindrical upstand 117. The underside of the inner wall 132 of the plug part can provide such a uniform force so long as the plug and socket parts are sufficiently well aligned in the axial direction. As shown, the inner edge of the top of the upstand 117 has a chamfer and, by selection of the angle of this chamfer and the radial clearance between the shutter flange 114 and the inner surface of the upstand 117, it is possible to achieve a satisfactory range of angle of approach of the plug to the socket whilst maintaining the electrical safety provided by the shutter.

The engaging surfaces of the shutter and the upstand 117, that is to say the surfaces which engage to prevent depression of the shutter when a nonuniform force is applied which causes it to tilt, could be curved so as to have a ball-and-socket type of co-operation allowing smooth disengagement of the locked shutter as the plug is brought into proper alignment for entry into the socket. By provision of such curved surfaces, the appliance proper part of a cordless appliance could be placed casually onto its base and smooth engagement between the plug and socket parts of the connector system would still be achieved.

Referring now to Figure 5 and back to Figure 2A, it will be seen that the top edge of the main housing 102 of the socket part 101 of the subject connector is provided with shaped castellations 150 designed to allow water to drain from the top surface of the socket whilst providing an inwardly facing guiding surface to enhance the engagement guidance of the plug 130 into the socket. As shown in Figure 2A, the inner surface of each castellation upstand forms part of a female conical annulus which acts to guide the bottom surface 133 of the inner wall 132 of the plug into contact and alignment with the top of the shutter 103, and also serves as a lead in for the contact provided at the end of spring terminal 135. The surfaces between the castellation upstands form part of a male conical annulus which slopes outwards and downwards to encourage any water spilled onto the top surface of the shutter to escape between the castellation upstands rather than penetrate to the interior of the socket. The main housing 102 is further provided with a skirt 151 which forms a water shedding feature designed to overlap an aperture in a cordless appliance base, for example, in which the socket is mounted.

The overtemperature disconnect device shown in Figure 2B is a modified form of the device described in GB-A-2194099 with reference to Figures 3A, 3B and 3C thereof and is illustrated herein in schematic form merely by way of an example of the way in which the plug part of the subject connector could be utilized. As illustrated in Figure 2A hereof the upper ends 161 and 162 of the spring terminals 135 and 136 in the plug portion 130 of the device extend into a switch enclosure 160 where they are engaged by respective electrically conductive springs 163 and 164 which are biassed into engagement with the terminal ends 161 and 162 by a moulded plastics material member 165 which corresponds to the thermally-collapsible carrier 121 shown in Figures 3A, 3B and 3C of GB-A-2194099 abovementioned.

Although not shown in Figure 2A, reference to GB-A-2194099 will show that the contact between the springs 163 and 164 and the terminal ends 161 and 162 is necessary in order that power can be supplied through the overtemperature disconnect device to an electrical heating element comprising a resistance heating element proper and an element head plate, the head plate of the heating element being shown in Figure 2B at 166. The member 165 stands on the head plate 166 as shown and, in the event of an overtemperature condition, the member 165 thermally deforms under the action of the spring 163 and 164 thereby breaking the connections made between the springs 163 and 164 and the terminal ends 161 and 162 and interrupting the supply of power to the heating element. As described in GB-A-2194099, the member 165 can serve to carry a bimetallic element in close thermal contact with the element head plate 166, the bimetallic element serving to open a set of contacts provided in the power supply line to the heating element in the event of an element overtemperature condition, the thermally induced collapse of the member 165 then serving a secondary or back-up function in the event, however unlikely, that the primary protective function provided by the bimetal and its associated contacts set fails to operate.

It will be appreciated that the above-described embodiment is exemplary only and that many modifications and variations are possible without departure from the general ambit of the invention as defined by the claims. For example, it would be possible to dispense with either the central terminal pin 134 or one of the spring terminals 135, 136 if there was no requirement for an earth terminal. If the central terminal pin 134 was dispensed with, then clearly there would be no need to form the central post 118 of the socket part 101 with a hollow interior and the spring terminal 108 could also be eliminated, though it could in some circumstances possibly be advantageous to retain the hollow interior of the central post as a feature for enhancing the water shedding ability of the socket. Other modifications and variations will readily occur to those possessed of relevant skills.

## Claims

1. A cordless electrical water heating appliance comprising: a vessel provided with a heating element for heating water in the vessel, a base for connection to an electrical power supply, an electrical connector (Fig 1, Fig 2A) provided on the base and a complementary electrical connector (Fig 2B) provided on the vessel, whereby the heating element in the vessel can be powered via the base when the vessel is seated on the base and said connectors are connected to each other, **characterized in that** said electrical connectors constitute an electrical connection system permitting the vessel to be operatively coupled to the base throughout 360° of relative rotational orientation between the respective parts and the electrical connector (Fig 1, Fig 2A) that is provided on the base is a shuttered electrical connector in the form of a socket (101) adapted to receive a complementary plug (130) provided on the vessel, the shutter (103) comprising a member mounted with spring bias within the socket (101) so as normally to be held in closed condition by the spring (106) and said member being such that it can be depressed into the socket (101) only if it is maintained in a predetermined disposition relative to the socket.

2. An appliance as claimed in claim 1 wherein the socket part (Fig 2A) comprises a circularly-cylindrical member (109) and the shutter (103) has a circular section and is axially displaceable so long as the shutter disposition is generally coaxial with the socket part, the arrangement being such that the shutter cannot be displaced within the socket if the shutter disposition is tilted out of coaxiality.

3. An appliance as claimed in claim 2 wherein a portion (114) of the shutter (103) is arranged to engage a portion (117) of the socket (Fig 2A) to prevent displacement of the shutter into the socket when the shutter disposition is out of coaxiality.

4. An appliance as claimed in claim 3 wherein the shutter (103) has a circularly-cylindrical portion (113) dimensioned to make a sliding fit within a corresponding portion (117) of the socket (Fig 2A), and entry of the circularly-cylindrical portion (113) into such corresponding socket portion (117) is inhibited by engagement of the one part with the other if the shutter (103) is depressed in a tilted disposition.

5. An appliance as claimed in claim 2 or 3 or 4 wherein a circularly-cylindrical post (118) is provided within the circularly-cylindrical socket member (117), the post extending coaxially of the circularly-cylindrical socket member, and the shutter (103) is annular and is arranged to be displaceable within the annular space between the internal surface of the circularly-cylindrical socket member (117) and the external surface of the post (118).

6. An appliance as claimed in any of claims 2 to 5 wherein an electrical contact ring (105) is provided in said circularly-cylindrical socket member (117) and an electrical terminal (135) is provided on the plug part (Fig 2B) for contacting said contact ring when the plug and socket parts are operably engaged.

7. An appliance as claimed in claim 6 wherein the electrical terminal (135) provided on the plug part (Fig 2B) comprises a contact carried by a terminal spring near the surface of a member (132) of the plug (Fig 2B) which is adapted to be inserted into the circularly-cylindrical socket member (117).

8. An appliance as claimed in claim 5, or as claimed in claim 6 or claim 7 as dependent upon claim 5, wherein an electrical contact ring (104) is provided on said post (118) and an electrical terminal (136) is provided on the plug part (Fig 2B) for contacting said contact ring on said post when the plug and socket parts are operably engaged.

9. An appliance as claimed in claim 8 wherein the electrical terminal (136) provided on the plug part (Fig 2B) for contacting the contact ring (104) on the post (118) comprises a contact carried by a terminal spring near the inner surface of a hollow member (132) of the plug which is adapted to be inserted into the annular space between the circularly-cylindrical socket member (117) and the post (118).

10. An appliance as claimed in any of claims 6 to 9 wherein the circularly-cylindrical socket member (117) and/or the post (1,18) respectively is provided with a portion (111;124) adjacent to the location of its respective contact ring (105;104) which is dimensioned so that the respective terminal (135;136) provided on the plug part (Fig 2B) does not drag across such portion during insertion and removal of the plug part (Fig 2B) into and from the socket part (Fig 8A).

11. An appliance as claimed in any of claims 6 to 10 wherein the or each said contact ring (104,105) is formed of copper or of a copper alloy having a thermal conductivity approaching that of copper and has a thick plating layer of silver antimony alloy.

12. An appliance as claimed in claim 5, or as claimed in any of claims 6 to 11 as dependent upon claim 5, wherein said post (118) is hollow.

13. An appliance as claimed in claim 12 wherein an electrical contact (108) is provided within said hollow post (118) and a terminal pin (134) is provided on the plug part (Fig 2B) for entering into the hollow post (118) and contacting said electrical contact (108) when the plug and socket parts are operably engaged.

14. An appliance as claimed in any of the preceding claims wherein the connector (Fig 5) that is provided on the base includes water-shedding formations (150).

15. An appliance as claimed in claim 14 wherein an annular rim of the connector that is provided on the base is formed with castellations, the inner surfaces of the upstands whereof form part of a female conical annulus serving to guide the vessel connector into the base connector, and the surfaces between the upstands whereof form part of a male conical annulus for encouraging the shedding of water between the castellations.

16. An appliance as claimed in any preceding claim wherein an overtemperature disconnect device (160) is associated with said heating element for disconnecting the heating element from its power supply in an element overtemperature situation.

17. An appliance as claimed in claim 16 wherein the connector on the vessel (Fig 2B) is formed as an integral part of said overtemperature disconnect device (160).

18. An appliance as claimed in claim 17 wherein the overtemperature disconnect device (160) is provided above the connector of the vessel (Fig 2B) and underlying the vessel heating element (166).

19. An appliance as claimed in any of claims 16 to 18 wherein the overtemperature disconnect device comprises a bimetallic element serving to open a set of contacts in response to a heating element overtemperature situation.

20. An appliance as claimed in any of the preceding claims wherein said electrical connection system comprises first and second annular terminals (104,105) arranged to be concentric with respect to each other when said connectors are connected, a third terminal (134) generally centrally of the first and second terminals, and complementary spring terminal parts (108, 135, 136) adapted to engage respective ones of the first, second and third terminals.

21. An appliance as claimed in claim 20 wherein the first and second annular terminal parts (104, 105) are provided on one of the two connectors and the third terminal part (134) is provided on the other of the two connectors.

22. An appliance as claimed in any of the preceding claims wherein the electrical connectors that are provided on the base and on the vessel are generally centrally positioned under the vessel and on the upper side of the base.

23. An appliance as claimed in any preceding claim wherein the electrical connectors provided on the base (Fig 2A) and on the vessel (Fig 2B) comprise live, neutral and earth terminal parts (104,105,108; 134,135,136), arranged such that the co-operating earth terminal parts (108;134) engage first when the vessel is placed on its base and disengage last when the vessel is removed from its base.

24. An appliance as claimed in any preceding claim wherein said electrical connectors are shaped externally to facilitate their mating by guiding them together once they are imprecisely engaged.

## Patentansprüche

1. Schnurloser elektrischer Wassererhitzer, der Folgendes umfasst: einen Behälter, der mit einem Heizelement zum Erhitzen von Wasser in dem Behälter versehen ist; eine Basis, die zum Anschließen an eine elektrische Spannungsquelle dient; einen elektrischen Verbinder (Fig. 1, Fig. 2A), der an der Basis angeordnet ist; und einen komplementären elektrischen Verbinder (Fig. 2B), der an dem Behälter angeordnet ist; wobei sich das Heizelement in dem Behälter über die Basis mit Strom versorgen lässt, wenn der Behälter auf die Basis gesetzt wird und die Verbinder miteinander verbunden sind; **dadurch gekennzeichnet, dass** die elektrischen Verbinder ein elektrisches Verbindungssystem bilden, das es ermöglicht, eine Wirkverbindung zwischen dem Behälter und der Basis über einen relativen Drehbereich von 360° zwischen den jeweiligen Teilen herzustellen, und der elektrische Verbinder (Fig. 1, Fig. 2A), der an der Basis angeordnet ist, ein eingeschalter elektrischer Verbinder in Form einer Fassung (101) ist, die dafür ausgebildet ist, einen komplementären Stecker (130), der an dem Behälter angeordnet ist, aufzunehmen, wobei die Schalung (103) ein Element umfasst, das mit einer Federvorspannung innerhalb der Fassung (101) so montiert ist, dass es durch die Feder (106) normalerweise in einem geschlossenen Zustand gehalten wird, und wobei das Element so gestaltet ist, dass es nur dann in die Fassung (101) niedergedrückt werden kann, wenn es in einer vorgegeben Stellung relativ zu der Fassung gehalten wird.

2. Wassererhitzer nach Anspruch 1, wobei der Fassungsabschnitt (Fig. 2A) ein kreisförmig-zylindrisches Element (109) umfasst und die Schalung (103) einen kreisförmigen Querschnitt aufweist und axial verschoben werden kann, solange die Stellung der Schalung allgemein koaxial zu dem Fassungsabschnitt ausgerichtet ist, wobei die Anordnung so gestaltet ist, dass die Schalung nicht innerhalb der Fassung verschoben werden kann, wenn die Stellung der Schalung aus der Koaxialität heraus geneigt ist.

3. Wassererhitzer nach Anspruch 2, wobei ein Abschnitt (114) der Schalung (103) dafür konfiguriert ist, einen Abschnitt (117) der Fassung (Fig. 2A) in Eingriff zu nehmen, um eine Verschiebung der Schalung in die Fassung hinein zu verhindern, wenn die Stellung der Schalung außerhalb der Koaxialität liegt.

4. Wassererhitzer nach Anspruch 3, wobei die Schalung (103) einen kreisförmig-zylindrischen Abschnitt (113) aufweist, der so bemessen ist, dass er eine Gleitpassung innerhalb eines entsprechenden Anschnitts (117) der Fassung (Fig. 2A) herstellt, und wobei der Eintritt des kreisförmig-zylindrischen Abschnitts (113) in den entsprechenden Fassungsabschnitt (117) durch die Eingriffnahme des einen Teils mit dem anderen behindert wird, wenn die Schalung (103) in einer geneigten Stellung niedergedrückt wird.

5. Wassererhitzer nach Anspruch 2 oder 3 oder 4, wobei eine kreisförmig-zylindrische Säule (118) innerhalb des kreisförmig-zylindrischen Fassungselements (117) angeordnet ist, wobei sich die Säule koaxial zu dem kreisförmig-zylindrischen Fassungselement erstreckt und die Schalung (103) ringförmig ist und dafür ausgebildet ist, innerhalb des Ringraums zwischen der Innenfläche des kreisförmig-zylindrischen Fassungselements (117) und der Außenfläche der Säule (118) verschoben werden zu können.

6. Wassererhitzer nach einem der Ansprüche 2 bis 5, wobei ein elektrischer Kontaktring (105) in dem kreisförmig-zylindrischen Fassungselement (117) angeordnet ist und ein elektrischer Anschluss (135) an dem Steckerteil (Fig. 2B) angeordnet ist, um einen Kontakt zu dem Kontaktring herzustellen, wenn der Stecker- und der Fassungsteil in Wirkeingriff gebracht werden.

7. Wassererhitzer nach Anspruch 6, wobei der elektrische Anschluss (135), der an dem Steckerteil (Fig. 2B) angeordnet ist, einen Kontakt umfasst, der durch eine Anschlussfeder nahe der Oberfläche eines Elements (132) des Steckers (Fig. 2B) getragen wird, der dafür ausgebildet ist, in das kreisförmig-zylindrische Fassungselement (117) eingesetzt zu werden.

8. Wassererhitzer nach Anspruch 5 oder nach Anspruch 6 oder Anspruch 7, wenn sie von Anspruch 5 abhängig sind, wobei ein elektrischer Kontaktring (104) an der Säule (118) angeordnet ist und ein elektrischer Anschluss (136) an dem Steckerteil (Fig. 2B) angeordnet ist, um zu dem Kontaktring an der Säule einen Kontakt herzustellen, wenn der Stecker- und der Fassungsteil in Wirkeingriff gebracht werden.

9. Wassererhitzer nach Anspruch 8, wobei der elektrische Anschluss (136), der an dem Steckerteil (Fig. 2B) angeordnet ist, um einen Kontakt zu dem Kontaktring (104) an der Säule (118) herzustellen, einen Kontakt umfasst, der von einer Anschlussfeder nahe der Innenfläche eines Hohlelements (132) des Steckers getragen wird, der dafür ausgebildet ist, in den Ringraum zwischen dem kreisförmig-zylindrischen Fassungselement (117) und der Säule (118) eingesetzt zu werden.

10. Wassererhitzer nach einem der Ansprüche 6 bis 9, wobei das kreisförmig-zylindrische Fassungselement (117) und/oder die Säule (118) jeweils mit einem Abschnitt (111; 124) neben der Position ihres jeweiligen Kontaktrings (105; 104) versehen sind, der so bemessen ist, dass der jeweilige Anschluss (135; 136), der an dem Steckerteil (Fig. 2B) angeordnet ist, nicht über diesen Abschnitt schleift, während der Steckerteil (Fig. 2B) in den Fassungsteil (Fig. 8A) eingeschoben und aus dem Fassungsteil (Fig. 8A) herausgezogen wird.

11. Wassererhitzer nach einem der Ansprüche 6 bis 10, wobei der oder jeder Kontaktring (104, 105) aus Kupfer oder einer Kupferlegierung, die eine Wärmeleitfähigkeit aufweist, die derjenigen von Kupfer nahe kommt, besteht und mit einer dicken galvanischen Schicht einer Silbe-Antimon-Legierung-beschtet ist.

12. Wassererhitzer nach Anspruch 5 oder nach einem der Ansprüche 6 bis 11, wenn sie von Anspruch 5 abhängig sind, wobei die Säule (118) hohl ist.

13. Wassererhitzer nach Anspruch 12, wobei innerhalb der hohlen Säule (118) ein elektrischer Kontakt (108) angeordnet ist und an dem Steckerteil (Fig. 2B) ein Anschlussstift (134) angeordnet ist, der dazu dient, in die hohle Säule (118) eingeführt zu werden und den elektrischen Kontakt (108) zu berühren, wenn der Stecker- und der Fassungsteil in Wirkeingriff gebracht werden.

14. Wassererhitzer nach einem der vorangehenden Ansprüche, wobei der an der Basis angebrachte Verbinder (Fig. 5) wasserableitende Ausprägungen (150) aufweist.

15. Wassererhitzer nach Anspruch 14, wobei ein ringförmiger Rand des Verbinders, der an der Basis angeordnet ist, mit zinnenförmigen Ausprägungen versehen ist, wobei die Innenflächen der aufwärts ragenden Abschnitte dieser zinnenförmigen Ausprägungen einen Teil eines konischen Aufnahmeringraums bilden, der dazu dient, den Verbinder des Behälters in den Verbinder der Basis zu führen, und die Flächen zwischen den aufwärts ragenden Abschnitten der zinnenförmigen Ausprägungen einen Teil eines konischen Einsteckringraums bilden, um das Ableiten von Wasser zwischen den zinnenförmigen Ausprägungen zu fördern.

16. Wassererhitzer nach einem der vorangehenden Ansprüche, wobei dem Heizelement eine Überhitzungstrennvorrichtung (160) zugeordnet ist, die dazu dient, das Heizelement im Fall einer Elementüberhitzung von seiner Spannungsquelle zu trennen.

17. Wassererhitzer nach Anspruch 16, wobei der Verbinder an dem Behälter (Fig. 2B) als ein integraler Teil der Überhitzungstrennvorrichtung (160) ausgebildet ist.

18. Wassererhitzer nach Anspruch 17, wobei die Überhitzungstrennvorrichtung (160) über dem Verbinder des Behälters (Fig. 2B) angeordnet ist und unter dem Heizelement (166) des Behälters angeordnet ist.

19. Wassererhitzer nach einem der Ansprüche 16 bis 18, wobei die Überhitzungstrennvorrichtung ein Bimetallelement umfasst, das dazu dient, einen Satz Kontakte zu öffnen, sobald es zu einer Heizelementüberhitzung kommt.

20. Wassererhitzer nach einem der vorangehenden Ansprüche, wobei das elektrische Verbindungssystem einen ersten und einen zweiten ringförmigen Anschluss (104, 105) umfasst, die so konfiguriert sind, dass sie konzentrisch zueinander angeordnet sind, wenn die Verbinder verbunden sind, wobei ein dritter Anschluss (134) relativ zu dem ersten und dem zweiten Anschluss allgemein mittig angeordnet ist und wobei komplementäre Federanschlussteile (108, 135, 136) dafür ausgebildet sind, den ersten, den zweiten bzw. den dritten Anschluss in Eingriff zu nehmen.

21. Wassererhitzer nach Anspruch 20, wobei der erste und der zweite ringförmige Anschlussteil (104, 105) an einem der beiden Verbinder angeordnet sind und der dritte Anschlussteil (134) an dem anderen der beiden Verbinder angeordnet ist.

22. Wassererhitzer nach einem der vorangehenden Ansprüche, wobei die elektrischen Verbinder, die an der Basis und an dem Behälter angeordnet sind, allgemein mittig unter dem Behälter und auf der Oberseite der Basis angeordnet sind.

23. Wassererhitzer nach einem der vorangehenden Ansprüche, wobei die elektrischen Verbinder, die an der Basis (Fig. 2A) und an dem Behälter (Fig. 2B) angeordnet sind, spannungsführende, neutrale und Erdungsanschlussteile (104, 105, 108; 134, 135, 136) umfassen, die so angeordnet sind, dass die zusammenwirkenden Erdungsanschlussteile (108; 134) zuerst in Eingriff gelangen, wenn der Behälter auf seine Basis gesetzt wird, und zuletzt ihre Eingriffnahme lösen, wenn der Behälter von seiner Basis heruntergenommen wird.

24. Wassererhitzer nach einem der vorangehenden Ansprüche, wobei die elektrischen Verbinder eine solche äußere Form aufweisen, dass ihr Zusammenpassen in der Weise unterstützt wird, dass sie zusammengeführt werden, wenn sie ungenau in gegenseitigen Eingriff gebracht werden.

## Revendications

1. Dispositif électrique sans fil pour chauffer de l'eau, comportant : un récipient muni d'un élément chauffant pour chauffer l'eau située dans le récipient, une base pour connexion à une alimentation en puissance électrique, un connecteur électrique (fig. 1, fig. 2A) agencé sur la base et un connecteur électrique complémentaire (fig. 2B) agencé sur le récipient, moyennant quoi l'élément chauffant situé dans le récipient peut être alimenté via la base lorsque le récipient est placé sur la base et que lesdits connecteurs sont connectés l'un à l'autre, **caractérisé en ce que** lesdits connecteurs électriques constituent un système de connexion électrique permettant au récipient d'être accouplé de manière opérationnelle à la base d'un bout à l'autre des 360° d'une orientation de rotation relative entre les parties respectives et le connecteur électrique (fig. 1, fig. 2A) qui est agencé sur la base est un connecteur électrique sécurisé sous la forme d'une prise (101) adaptée pour recevoir une fiche complémentaire (130) agencée sur le récipient, le dispositif de sécurité (103) comprenant un élément monté avec précontrainte d'un ressort dans la prise (101) de manière à être normalement maintenu dans un état fermé par le ressort (106) et ledit élément étant tel qu'il peut être abaissé dans la prise (101) seulement s'il est maintenu dans une disposition prédéterminée par rapport à la prise.

2. Dispositif selon la revendication 1, dans lequel la partie de prise (fig. 2A) comprend un élément circulairement cylindrique (109) et l'obturateur (103) a une section circulaire et est déplaçable axialement tant que la disposition du dispositif de sécurité est globalement coaxiale avec la partie de prise, l'agencement étant tel que le dispositif de sécurité ne peut pas être déplacé dans la prise si la disposition du dispositif de sécurité est inclinée hors coaxialité.

3. Dispositif selon la revendication 2, dans lequel une partie (114) du dispositif de sécurité (103) est agencée pour venir en prise avec une partie (117) de la prise (fig. 2A) pour empêcher le déplacement du dispositif de sécurité dans la prise lorsque la disposition du dispositif de sécurité est hors coaxialité.

4. Dispositif selon la revendication 3, dans lequel le dispositif de sécurité (103) a une partie circulairement cylindrique (113) dimensionnée pour établir un ajustement coulissant dans une partie correspondante (117) de la prise (fig. 2A), l'entrée de la partie circulairement cylindrique (113) dans une telle partie de prise correspondante (117) est interdite par la mise en prise de la une partie avec l'autre si le dispositif de sécurité (103) est abaissé dans une disposition inclinée.

5. Dispositif selon la revendication 2 ou 3 ou 4, dans lequel un montant circulairement cylindrique (118) est agencé dans l'élément de prise circulairement cylindrique (117), le montant s'étendant coaxialement à l'élément de prise circulairement cylindrique, et le dispositif de sécurité (103) est annulaire et est agencé pour être déplaçable dans l'espace annulaire entre la surface interne de l'élément de prise circulairement cylindrique (117) et la surface externe du montant (118).

6. Dispositif selon l'une quelconque des revendications 2 à 5, dans lequel un anneau de contact électrique (105) est agencé dans ledit élément de prise circulairement cylindrique (117), et une borne électrique (135) est agencée sur la partie de fiche (fig. 2B) pour établir un contact avec ledit anneau de contact lorsque les parties de fiche et de prise sont en prise opérationnelle.

7. Dispositif selon la revendication 6, dans lequel la borne électrique (135) agencée sur la partie de fiche (fig. 2B) comporte un contact porté par un ressort de borne proche de la surface d'un élément (132) de la fiche (fig. 2B) qui est adapté pour être inséré dans l'élément de prise circulairement cylindrique (117).

8. Dispositif selon la revendication 5, ou selon la revendication 6 ou 7 lorsqu'elle dépend de la revendication 5, dans lequel un anneau de contact électrique (104) est agencé sur ledit montant (118), et une borne électrique (136) est agencée sur la partie de fiche (fig. 2B) pour établir un contact avec ledit anneau de contact situé sur ledit montant lorsque les parties de fiche et de prise sont en prise opérationnelle.

9. Dispositif selon la revendication 8, dans lequel la borne électrique (136) agencée sur la partie de fiche (fig. 2B) pour établir un contact avec l'anneau de contact (104) situé sur le montant (118) comporte un contact porté par un ressort de borne à proximité de la surface intérieure d'un élément creux (132) de la fiche qui est adapté pour être inséré dans l'espace annulaire situé entre l'élément de prise circulairement cylindrique (117) et le montant (118).

10. Dispositif selon l'une quelconque des revendications 6 à 9, dans lequel l'élément de prise circulairement cylindrique (117) et/ou le montant (118) est respectivement muni d'une partie (111;124) adjacente à l'emplacement de son anneau de contact respectif (105;104) qui est dimensionnée de sorte que la borne respective (135;136) agencée sur la partie de fiche (fig. 2B) ne frotte pas à travers une telle partie pendant une insertion et un enlèvement de la partie de fiche (fig. 2B) dans, et à partir de la partie de prise (fig. 8A).

11. Dispositif selon l'une quelconque des revendications 6 à 10, dans lequel l'anneau de contact ou chaque anneau de contact (104,105) est constitué de cuivre ou d'un alliage de cuivre ayant une conductivité thermique approchant celle du cuivre, et a une couche de revêtement épais constitué d'un alliage d'antimoine d'argent.

12. Dispositif selon la revendication 5, ou selon l'une quelconque des revendications 6 à 11 lorsqu'elles dépendent de la revendication 5, dans lequel ledit montant (118) est creux.

13. Dispositif selon la revendication 12, dans lequel un contact électrique (108) est agencé dans ledit montant creux (118), et une broche de borne (134) est agencée sur la partie de fiche (fig. 2B) pour entrer dans le montant creux (118) et établir un contact avec ledit contact électrique (108) lorsque les parties de fiche et de prise sont en prise opérationnelle.

14. Dispositif selon l'une quelconque des revendications précédentes, dans lequel le connecteur (fig. 5) qui est agencé sur la base comporte des formations de déversement d'eau (150).

15. Dispositif selon la revendication 14, dans lequel un rebord annulaire du connecteur qui est agencé sur la base est muni de créneaux, dont les surfaces intérieures des parties verticales forment une partie d'un espace annulaire conique femelle servant à guider le connecteur de récipient dans le connecteur de base, et les surfaces situées entre les parties verticales de ceux-ci forment une partie d'un espace annulaire conique mâle pour encourager le déversement d'eau entre les créneaux.

16. Dispositif selon l'une quelconque des revendications précédentes, dans lequel un dispositif de déconnexion en cas de surchauffe (160) est associé audit élément chauffant pour déconnecter l'élément chauffant de son alimentation électrique dans un état de surchauffe de l'élément.

17. Dispositif selon la revendication 16, dans lequel le connecteur sur le récipient (fig. 2B) est formé d'un seul tenant avec ledit dispositif de déconnexion en cas de surchauffe (160).

18. Dispositif selon la revendication 17, dans lequel le dispositif de déconnexion en cas de surchauffe (160) est agencé au-dessus du connecteur du récipient (fig. 2B) et en dessous de l'élément chauffant (166) du récipient.

19. Dispositif selon l'une quelconque des revendications 16 à 18, dans lequel le dispositif de déconnexion en cas de surchauffe comprend un élément bimétallique servant à ouvrir un ensemble de contacts en réponse à un état de surchauffe de l'élément chauffant.

20. Dispositif selon l'une quelconque des revendications précédentes, dans lequel ledit système de connexion électrique comprend des première et deuxième bornes électriques annulaires (104,105) agencées de manière concentrique l'une par rapport à l'autre lorsque lesdits connecteurs sont connectés, une troisième borne (134) agencée de manière générale au centre des première et deuxième bornes, et des parties de bornes élastiques complémentaires (108,135,136) adaptées pour venir en prise avec celles respectives des première, deuxième et troisième bornes.

21. Dispositif selon la revendication 20, dans lequel les première et deuxième bornes annulaires (104,105) sont agencées sur l'un des deux connecteurs, et la troisième borne (134) est agencée sur l'autre des deux connecteurs.

22. Dispositif selon l'une quelconque des revendications précédentes, dans lequel les connecteurs électriques qui sont agencés sur la base et sur le récipient sont généralement positionnés de manière centrale sous le récipient et sur le côté supérieur de la base.

23. Dispositif selon l'une quelconque des revendications précédentes, dans lequel les connecteurs électriques agencés sur la base (fig. 2A) et sur le récipient (fig. 2B) comportent des parties formant bornes sous tension, neutre et de masse (104,105,108;134,135,136) agencées de telle sorte que les parties formant bornes de masse coopérantes (108;134) viennent en prise les premières lorsque le récipient est placé sur sa base, et se libèrent les dernières lorsque le récipient est enlevé de sa base.

24. Dispositif selon l'une quelconque des revendications précédentes, dans lequel lesdits connecteurs électriques sont mis en forme extérieurement pour faciliter leur appariement en les guidant ensemble aussitôt qu'ils sont en prise de manière imprécise.
